# EUROPEAN PATENT APPLICATION

(11) **EP 2 764 793 A2**
(43) Date of publication of application: **13.08.2014**
(21) Application number: 12837691.0
(22) Date of filing: 08.10.2012
(51) Int. Cl.: A45C 11/00

(54) **MOBILE COMMUNICATION TERMINAL CASE AND TABLET PC CASE**

(30) Priority: 07.10.2011 KR 20110102444
(71) Applicant: PenAndFree Co., Ltd., Gyeonggi-do 462-720 (KR)
(72) Inventor: LEE, Jae Jun, Seoul 138-747 (KR)
(74) Representative: ABG Patentes, S.L.
(86) International application number: PCT/KR2012/008126
(87) International publication number: WO 2013/051911

(57) **Abstract**

The present invention relates to a mobile communication terminal case capable of accurately measuring the position of an electronic pen tip. The mobile communication terminal case comprises: a main body unit arranged at an outer surface of the mobile communication terminal such that a touch screen of an electronic device may be exposed outwardly; a position measuring unit including an electronic pen for inputting a content to be displayed on the touch screen, and position measuring means arranged at one side of the main body unit to measure the position of the electronic pen tip; and a communication unit which transmits information on the position of the electronic pen tip measured by the position measuring unit to the mobile communication terminal. Thus, the position of a character or symbol to be inputted can be accurately measured in inputting the character or symbol in an electronic device with a touch screen, thereby improving the reliability and preventing the erroneous operation of the device. Thus, time taken to input a character or symbol is shortened to achieve improved convenience of use.

## Description

### TECHNICAL FIELD

The present invention relates to a mobile communication terminal case and a tablet PC case, and more particularly, to a mobile communication terminal case and a tablet PC case capable of accurately measuring the position of an electronic pen tip.

### BACKGROUND ART

Generally, a touch screen implemented as a touch pad is attached to a display unit. Such touch screen is mainly mounted to a Personal Digital Assistant (PDA). However, as various types of devices have a Graphical User Interface (GUI) therein, such touch screen is being widely applied to electronic devices such as a navigation system, a Point-Of-Sale (POS) device, an Automatic Teller Machine (ATM), a Portable Multimedia Player (PMP) and a mobile communication terminal.

Generally, a user inputs characters, symbols, or drawings using his or her finger. However, in some cases, an additional electronic pen may be used for precise input.

A method for inputting characters, symbols, etc. using an electronic pen will be explained as follows. Firstly, regions on the touch screen, where desired characters or symbols are positioned, are touched by an electronic pen. The desired characters or symbols are selected from characters or symbols arranged on a keyboard or a keypad displayed on the touch screen. Upon touch of the desired characters or symbols, a change of pressure or occurrence of static electricity is sensed on the touch screen. As a result, the desired characters or symbols are displayed on the touch screen.

However, the conventional method for inputting characters or symbols may have the following problems.

Firstly, characters or symbols are densely arranged on the keyboard or the keypad due to a limited size of the touch screen. This may cause a change of pressure or occurrence of static electricity not to be precisely sensed on a region on the touch screen, the region with which an electronic pen or a user's finger comes in contact.

As a result, a user's desired characters or symbols are not precisely input. This may lower reliability of the device. Further, it takes a long time to input characters or symbols due to an erroneous operation. This may cause user's inconvenience.

### DISCLOSURE OF THE INVENTION

Therefore, an object of the present invention is to provide a mobile communication terminal case and a tablet PC case, capable of enhancing reliability by precisely measuring positions of characters or symbols to be input to an electronic device having a touch screen, and capable of enhancing a user's convenience by reducing time taken to input characters or symbols by preventing an erroneous operation.

To achieve these and other advantages and in accordance with the purpose of the present invention, as embodied and broadly described herein, there is provided a mobile communication terminal case, comprising: a main body unit arranged at an outer surface of the mobile communication terminal such that a touch screen of an electronic device may be exposed outwardly; a position measuring unit including an electronic pen for inputting a content to be displayed on the touch screen, and position measuring means arranged at one side of the main body unit to measure the position of the electronic pen tip; and a communication unit which transmits information on the position of the electronic pen tip measured by the position measuring unit to the mobile communication terminal.

The electronic pen may include a reference signal generating unit for generating a reference signal, and an ultrasonic signal generating unit for generating ultrasonic signals. The position measuring means may include a reference signal receiving unit for receiving a reference signal generated from the reference signal generating unit, and a plurality of ultrasonic wave receiving portions for receiving ultrasonic signals generated from the ultrasonic signal generating unit.

The plurality of ultrasonic signal receiving portions may be composed of a first ultrasonic signal receiving portion and a second ultrasonic signal receiving portion disposed at two sides of the reference signal receiving unit.

The first ultrasonic signal receiving portion, the reference signal receiving unit and the second ultrasonic signal receiving portion may be arranged at one side or another side of the main body unit.

The communication unit may perform communication with the mobile communication terminal, by a Bluetooth method, a wireless method or a wired method.

A bent surface may be formed at an upper part of the main body unit, so as to enclose an upper end of the mobile communication terminal. An insertion unit having an insertion groove may be formed at a lower part of the main body unit, the insertion groove for inserting a lower end of the mobile communication terminal. Two side surfaces of the main body unit may be forward extended by a prescribed length to thus be bent.

A battery may be additionally provided in the main body unit. A power button, configured to selectively supply power from the battery to the position measuring unit and the communication unit, may be provided at one side of the main body unit.

A charging terminal, which contacts an external terminal of the mobile communication terminal, may be provided at an inner side of the insertion groove, such that the battery and a battery inside the mobile communication terminal are charged reciprocally.

An earphone hole, through which an earphone insertion opening of the mobile communication terminal is exposed to outside, may be penetratingly-formed at the bent surface. An antenna hole, through which an antenna of the mobile communication terminal is exposed to outside, may be penetratingly-formed at the bent surface.

A microphone hole, through which a microphone of the mobile communication terminal is exposed to outside, may be penetratingly-formed on a front surface of the insertion unit 140.

To achieve these and other advantages and in accordance with the purpose of the present invention, as embodied and broadly described herein, there is also provided a tablet PC case, comprising: a main body unit arranged at an outer surface of the tablet PC such that a touch screen of an electronic device may be exposed outwardly; a position measuring unit including an electronic pen for inputting a content to be displayed on the touch screen, and including position measuring means for measuring the position of the electronic pen tip; and a communication unit which transmits information on the position of the electronic pen tip measured by the position measuring unit to the tablet PC, wherein the electronic pen includes a reference signal generating unit for generating a reference signal, and an ultrasonic signal generating unit for generating ultrasonic signals, and wherein the position measuring means include a reference signal receiving unit for receiving an infrared signal generated from the reference signal generating unit, and a plurality of ultrasonic signal receiving portions for receiving ultrasonic signals generated from the ultrasonic signal generating unit, the reference signal receiving unit and the ultrasonic signal receiving portions protruding from one side of the main body unit toward a front surface of the touch screen.

The ultrasonic signal receiving portions may be composed of a first ultrasonic signal receiving portion and a second ultrasonic signal receiving portion disposed at two sides of the reference signal receiving unit.

The reference signal receiving unit, the first ultrasonic signal receiving portion and the second ultrasonic signal receiving portion may be disposed at one side of the main body unit, or another side of the main body unit with the same separation distance therebetween.

The communication unit may perform communication with the tablet PC, by a Bluetooth method, a wireless method or a wired method.

A keypad unit, which is detachable from the main body unit, may be provided at one side of the main body unit so as to be overlapped with or unfolded from the main body unit.

A holder, configured to support the tablet PC with a predetermined inclination angle from the ground surface, may be provided on a rear surface of the main body unit.

The mobile communication terminal case and the tablet PC case according to the present invention can have the following advantages.

Firstly, reliability can be enhanced by precisely measuring positions of characters or symbols to be input to an electronic device having a touch screen.

Secondly, a user's convenience can be enhanced by reducing time taken to input characters or symbols by preventing an erroneous operation.

### BRIEF DESCRIPTION OF THE DRAWINGS

FIG. 1 is a view schematically illustrating a position measuring principle used in the present invention;
FIG. 2 is a perspective view illustrating a structure where a mobile communication terminal has been separated from a mobile communication terminal case according to an embodiment of the present invention;
FIG. 3 is a perspective view illustrating a structure of a rear surface of the mobile communication terminal of FIG. 2;
FIG. 4 is a perspective view illustrating a structure where a tablet PC has been separated from a tablet PC case according to another embodiment of the present invention;
FIG. 5 is a perspective view illustrating a structure where a tablet PC has been coupled to the tablet PC case of FIG. 4;
FIG. 6 is a planar view illustrating a structure of an electronic pen according to the present invention; and
FIG. 7 is a block diagram illustrating an electrical connection structure of a mobile communication terminal case and a tablet PC case according to the present invention.

### MODES FOR CARRYING OUT THE PREFERRED EMBODIMENTS

Hereinafter, a mobile communication terminal case according to the present invention will be explained in more detail with reference to the attached drawings.

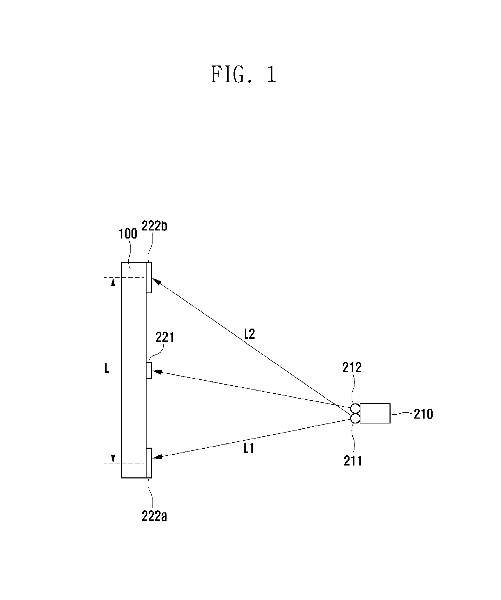

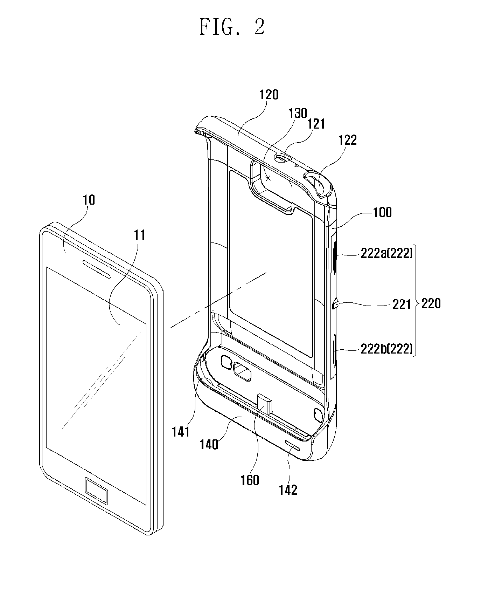

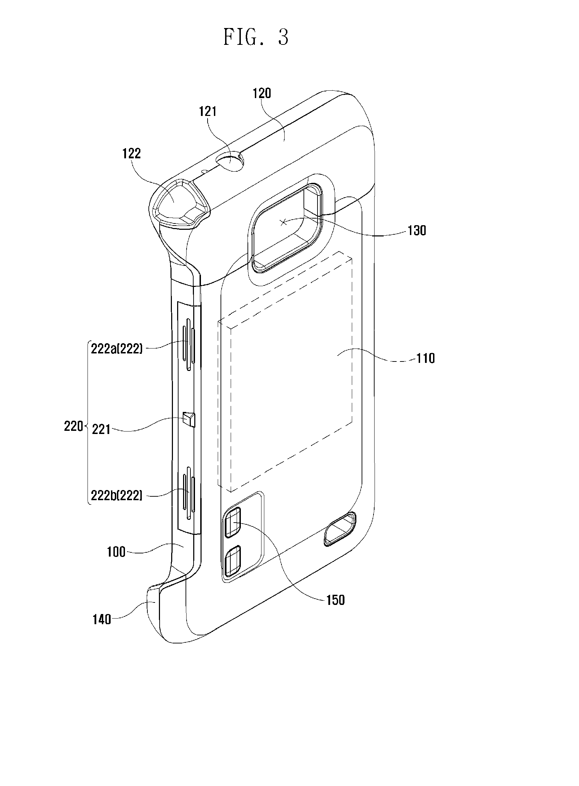

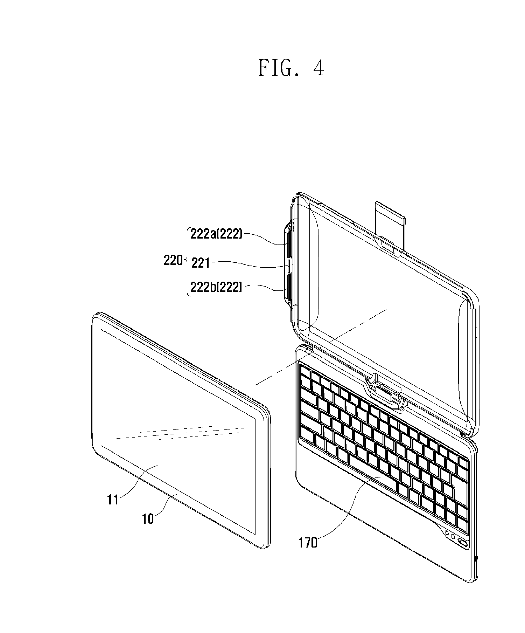

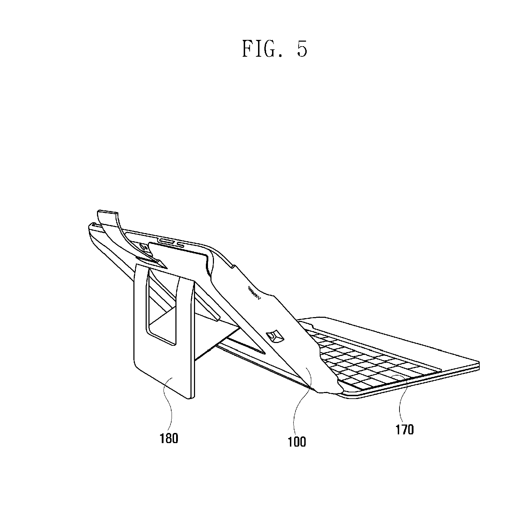

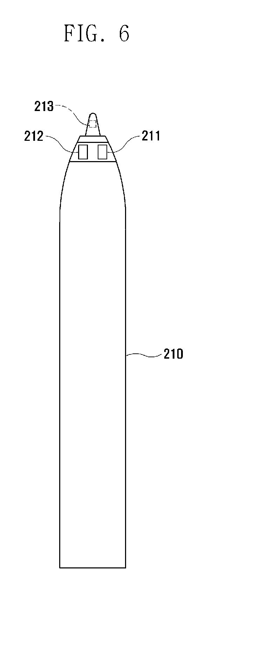

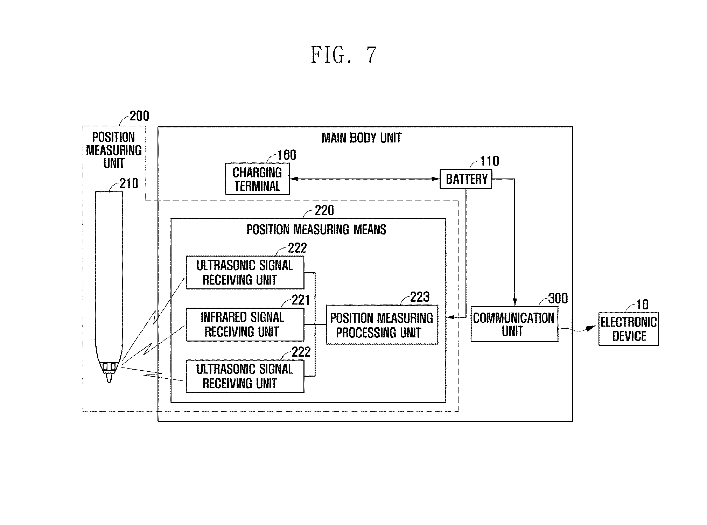

FIG. 1 is a view schematically illustrating a position measuring principle used in the present invention. FIG. 2 is a perspective view illustrating a structure where a mobile communication terminal has been separated from a mobile communication terminal case according to an embodiment of the present invention. FIG. 3 is a perspective view illustrating a structure of a rear surface of the mobile communication terminal of FIG. 2. FIG. 4 is a perspective view illustrating a structure where a tablet PC has been separated from a tablet PC case according to another embodiment of the present invention. FIG. 5 is a perspective view illustrating a structure where a tablet PC has been coupled to the tablet PC case of FIG. 4. FIG. 6 is a planar view illustrating a structure of an electronic pen according to the present invention. FIG. 7 is a block diagram illustrating an electrical connection structure of a mobile communication terminal case and a tablet PC case according to the present invention.

As shown, the mobile communication terminal case according to an embodiment of the present invention comprises: a main body unit 100 arranged at an outer surface of a mobile communication terminal 10 such that a touch screen 11 of an electronic device 10 may be exposed outwardly; a position measuring unit 200 including an electronic pen 210 for inputting a content to be displayed on the touch screen 11, and position measuring means 220 arranged at one side of the main body unit 100 to measure the position of the electronic pen tip; and a communication unit 300 which transmits information on the position of the electronic pen tip measured by the position measuring unit 200 to the mobile communication terminal 10.

Firstly, a position measuring principle of the electronic pen applied to the present invention will be explained with reference to FIG. 1.

A first ultrasonic signal receiving portion 222a and a second ultrasonic signal receiving portion 222b are positioned at opposite sides based on an infrared signal receiving portion 221, with a distance of 'L/2', respectively. That is, a distance between the first ultrasonic signal receiving portion 222a and the second ultrasonic signal receiving portion 222b is 'L'.

It is assumed that a distance between the electronic pen 210 and the first ultrasonic signal receiving portion 222a is 'L1', and a distance between the electronic pen 210 and the second ultrasonic signal receiving portion 222b is 'L2'.

The position measuring principle of the present invention is as follows. First of all, first distance information on the 'L1' and second distance information on the 'L2' are calculated based on a difference of times when an infrared signal and ultrasonic signals are received by the position measuring means 220 of the electronic device 10 having the touch screen of the present invention respectively. Then third distance information on the preset 'L' is obtained. The first distance information, the second distance information and the third distance information are applied to the Pythagorean Theorem, thereby accurately measuring a two-dimensional position of an end portion of the electronic pen 210, on the touch screen 11 or a writing surface.

A reference signal, by which time differences (time delay) used to measure the 'L1' and the 'L2' can be calculated, may be any signal which is transmitted at a speed of light, e. g, an infrared signal or an RF signal. In an embodiment and another embodiment of the present invention, the reference signal is implemented as an infrared signal.

A device, to which the mobile communication terminal case of the present invention is applicable, may be any device having the touch screen 11, e.g., a personal digital assistant (PDA), a navigation, a portable multimedia player (PMP), or a mobile communication terminal.

FIGS. 2 and 3 illustrate a mobile communication terminal case according to an embodiment of the present invention, which is applicable to a mobile communication terminal.

As shown in FIGS. 2 and 3, the main body unit 100, which is applicable to a mobile communication terminal, is formed in a shape to enclose a rear surface and side surfaces of the mobile communication terminal 10. The main body unit 100, a member coupled to an outer surface of the mobile communication terminal 10, may be provided with therein a battery 110 for supplying power.

A bent surface 120, configured to cover an upper surface of the mobile communication terminal 10, is provided at an upper part of the main body unit 100. An earphone hole 121, communicated with an earphone terminal of the mobile communication terminal 10, is penetratingly-formed at one side of the bent surface 120. An antenna hole 122, through which an antenna of the mobile communication terminal 10 is withdrawn out, is formed at the bent surface 120 close to the earphone hole 121.

A camera hole 130, through which a camera of the mobile communication terminal 10 is exposed to outside for capturing, is penetratingly-formed at an upper central region of a bottom surface of the main body unit 100.

An insertion unit 140, which has an insertion groove 141 for inserting part of a lower end of the mobile communication terminal 10 so that the main body unit 100 can be prevented from being separated from the mobile communication terminal 10, is provided at a lower part of the main body unit 100.

A microphone hole 142, through which a front surface of a microphone installed at the mobile communication terminal 10 is exposed to outside, is penetratingly-formed at one planar surface of the insertion unit 140. Edges of the insertion unit 140 are formed to be rounded.

A power button 150, configured to select whether to supply power to an infrared signal receiving unit 221 and an ultrasonic signal receiving unit 222 from the battery 110, is provided at one side on the rear surface of the main body unit 100.

A charging terminal 160, serving as a passage through which a battery of the mobile communication terminal 10 is electrically connected to the battery 110 of the main body unit 100 to thus be reciprocally charged, is provided at one side of the insertion groove 141 in which an end portion of the mobile communication terminal 10 is inserted.

Side surfaces of the main body unit 100 are formed to be bent by a predetermined length, so as to cover side surfaces of the mobile communication terminal 10. The infrared signal receiving unit 221 and the ultrasonic signal receiving unit 222 are sequentially arranged at a central region of one bent side surface of the main body unit 100. The infrared signal receiving unit 221 and the ultrasonic signal receiving unit 222 are spaced from each other by a predetermined distance, along a lengthwise direction of the main body unit 100.

The ultrasonic signal receiving unit 222 is composed of a first ultrasonic signal receiving portion 222a and a second ultrasonic signal receiving portion 222b disposed at two sides based on the infrared signal receiving unit 221. A distance from the first ultrasonic signal receiving portion 222a to the infrared signal receiving unit 221 may be the same as a distance from the second ultrasonic signal receiving portion 222b to the infrared signal receiving unit 221.

That is, under an assumption that a distance between the first ultrasonic signal receiving portion 222a and the second ultrasonic signal receiving portion 222b is 'L', the infrared signal receiving unit 221 is arranged at a position 'L/2' where the distance between the first ultrasonic signal receiving portion 222a and the infrared signal receiving unit 221 is the same as the distance between the second ultrasonic signal receiving portion 222b and the infrared signal receiving unit 221.

The infrared signal receiving unit 221 is not necessary arranged at the position 'L/2' which corresponds to the half of the distance between the first ultrasonic signal receiving portion 222a and the second ultrasonic signal receiving portion 222b. That is, the infrared signal receiving unit 221 may be arranged at any position where signals can be received.

FIGS. 4 and 5 illustrate a mobile communication terminal case according to another embodiment of the present invention, which is applied to a tablet PC. The same components as the mobile communication terminal case according to an embodiment of the present invention will be provided with the same reference numerals, and detailed explanations thereof will be omitted.

As shown in FIGS. 4 and 5, an infrared signal receiving unit 221 for receiving an infrared signal generated from an infrared signal generating unit 211, and a plurality of ultrasonic signal receiving portions 222 for receiving ultrasonic signals generated from an ultrasonic signal generating unit 212 are formed at one side of the main body unit 100 which is applicable to the tablet PC 10. In this case, the infrared signal receiving unit 221 and the plurality of ultrasonic signal receiving portions 222 may be protruded toward a front surface of the touch screen 11.

The reason is as follows. In case of inputting position information (e.g., drawing a picture on the touch screen 11 of the tablet PC using the electronic pen 210), the electronic pen 210 is mainly moved on the front surface of the touch screen 11. Accordingly, ultrasonic signals and a reference signal generated from the electronic pen 210 are made to be directly received by a receiver, so that the position of an end portion of the electronic pen 210 (electronic pen tip) can be accurately recognized.

A keypad unit 170, which is detachable from the main body unit 100, is provided at one side of the main body unit 100 so as to be overlapped with or unfolded from the main body unit 100.

The keypad unit 170, a member serving to replace a keypad on the screen supported by the tablet PC 10, allows the entire screen of the tablet PC 10 to be used as a display.

Further, the keypad unit is provided with keys with which users are familiar. Under such configuration, a user can rapidly input characters or symbols on the screen.

In the case where the keypad unit 170 is additionally provided at one side of the main body unit 100, a holder 180, configured to support the tablet PC 10 with a predetermined inclination angle from the ground surface, is additionally provided at one side on a rear surface of the main body unit 100

The infrared signal receiving unit 221 and the ultrasonic signal receiving portions 222 of the position measuring means 220 are arranged along a short edge on a front surface of the main body unit 100. The infrared signal receiving unit 221 and the ultrasonic signal receiving portions 222 are protruded by a predetermined height, and are spaced from each other by a predetermined distance.

As shown in FIG. 6, the electronic pen 210 for selecting characters or symbols to be input, or for drawing a picture on the touch screen 11 includes an infrared signal generating unit 211 for generating an infrared signal, an ultrasonic signal generating unit 212 for generating ultrasonic signals, and a contact sensing unit 213 for sensing whether the electronic pen tip has contacted the touch screen 11.

In order to accurately measure the position of the electronic pen tip, the infrared signal generating unit 211 and the ultrasonic signal generating unit 212 are preferably arranged at regions close to the electronic pen tip.

The infrared signal generating unit 211 and the ultrasonic signal generating unit 212 are configured to receive power from a battery provided in the electronic pen 210. Preferably, a power button (not shown) is additionally provided at one side of the electronic pen 210 for long-term use of the battery.

Position measuring means 220, provided at a main body unit 100, include an infrared signal receiving unit 221 disposed on an outer circumferential surface of the main body unit 100, and configured to receive an infrared signal generated from the infrared signal generating unit 211; a plurality of ultrasonic signal receiving portions 222 configured to receive ultrasonic signals generated from the ultrasonic signal generating unit 212; and a position measuring processing unit 223 disposed in the main body unit 100.

The ultrasonic signal receiving unit 222 is composed of a first ultrasonic signal receiving portion 222a and a second ultrasonic signal receiving portion 222b disposed at two sides based on the infrared signal receiving unit 221. A distance from the first ultrasonic signal receiving portion 222a to the infrared signal receiving unit 221 may be the same as a distance from the second ultrasonic signal receiving portion 222b to the infrared signal receiving unit 221.

That is, under an assumption that a distance between the first ultrasonic signal receiving portion 222a and the second ultrasonic signal receiving portion 222b is 'L', the infrared signal receiving unit 221 may be arranged at a position 'L/2' where the distance between the first ultrasonic signal receiving portion 222a and the infrared signal receiving unit 221 is the same as the distance between the second ultrasonic signal receiving portion 222b and the infrared signal receiving unit 221.

Like in one embodiment of the present invention, the infrared signal receiving unit 221 is not necessary arranged at the position 'L/2' which corresponds to the half of the distance between the first ultrasonic signal receiving portion 222a and the second ultrasonic signal receiving portion 222b. That is, the infrared signal receiving unit 221 may be arranged at any position where signals can be received.

The position measuring processing unit 223 is provided at an inner side of the main body unit 100. And the position measuring processing unit 223 is configured to calculate the position of the electronic pen tip, based on a difference between a time when an infrared signal (reference signal) has been received by the infrared signal receiving unit 221, and times when ultrasonic signals have been received by the plurality of ultrasonic signal receiving portions 222, respectively.

A communication unit 300 is configured to transmit information on the position of the electronic pen tip calculated by the position measuring means 220, to an electronic device 10 such as a mobile communication terminal or a tablet PC, so that the position of the electronic pen tip on the touch screen 11 of the mobile communication terminal or the tablet PC can be recognized.

Preferably, the communication unit 300 performs communication with the electronic device 10 having the touch screen 11, such as the mobile communication terminal or the tablet PC, by a Bluetooth communication method.

A method for measuring the position of the electronic pen tip on the touch screen using the mobile communication terminal case according to the present invention will be explained as follows.

Firstly, a power button 140 of the main body unit 100 is pressed to be turned on. Then power of the battery 110 is supplied to the position measuring means 220, i.e., the infrared signal receiving unit 221, the first ultrasonic signal receiving portion 222a and the second ultrasonic signal receiving portion 222b.

Under such state, if the electronic pen 210 is positioned on the touch screen 11 of the electronic device 10, an infrared signal generated from the infrared signal generating unit 211 of the electronic pen 210 is received by the infrared signal receiving unit 221, and ultrasonic signals generated from the ultrasonic signal generating unit 212 of the electronic pen 210 are received by the first ultrasonic signal receiving portion 222a and the second ultrasonic signal receiving portion 222b, respectively.

In this case, the infrared signal is firstly received by the infrared signal receiving unit 221. Then the ultrasonic signals are received by the first ultrasonic signal receiving portion 222a and the second ultrasonic signal receiving portion 222b. Times, when the ultrasonic signals are received by the first ultrasonic signal receiving portion 222a and the second ultrasonic signal receiving portion 222b, are variable according to the position of the electronic pen 210.

A propagation speed of an infrared signal in the air is 3*10⁸ m/s, which is much faster than that of an ultrasonic signal in the air. Therefore, in the present invention, a propagation time of an infrared signal is ignored, and it is assumed that an infrared signal is simultaneously transmitted and received.

Under such configuration, a preset distance between the first ultrasonic signal receiving portion 222a and the second ultrasonic signal receiving portion 222b, a distance between the electronic pen tip and the first ultrasonic signal receiving portion 222a, and a distance between the electronic pen tip and the second ultrasonic signal receiving portion 222b are measured. Accordingly, the position of the electronic pen tip on the touch screen 11 can be checked. Such position of the electronic pen tip is calculated by the position measuring processing unit 223 using the Pythagorean Theorem.

The measured position of the electronic pen tip is provided to the electronic device 10 by the communication unit 300. If the electronic pen 210 touches the touch screen 11 under such state, a character or a symbol corresponding to the touched position is precisely selected. This can prevent an erroneous operation, thereby enhancing the reliability of the device. Further, time taken to input a character or a symbol can be shortened.

In a case where the electronic device is a mobile communication terminal, the electronic pen 210 is not moved on the small touch screen 11 of the mobile communication terminal for drawing a picture. Rather, the electronic pen 210 is moved on a writing surface positioned at one side of the mobile communication terminal. Accordingly, the position of the electronic pen tip is measured in the same manner as in the aforementioned method. This can allow a user to draw a picture in more detail.

It will be apparent to those skilled in the art that various modifications and variations can be made in the present invention without departing from the spirit or scope of the invention. Thus, it is intended that the present invention cover modifications and variations of this invention provided they come within the scope of the appended claims and their equivalents.

## Claims

1. A mobile communication terminal case, comprising:
a main body unit arranged at an outer surface of the mobile communication terminal such that a touch screen of an electronic device may be exposed outwardly;
a position measuring unit including an electronic pen for inputting a content to be displayed on the touch screen, and position measuring means arranged at one side of the main body unit to measure the position of the electronic pen tip; and
a communication unit which transmits information on the position of the electronic pen tip measured by the position measuring unit to the mobile communication terminal.

2. The mobile communication terminal case of claim 1, wherein the electronic pen includes a reference signal generating unit for generating a reference signal, and an ultrasonic signal generating unit for generating ultrasonic signals, and
wherein the position measuring means include a reference signal receiving unit for receiving a reference signal generated from the reference signal generating unit, and a plurality of ultrasonic wave receiving portions for receiving ultrasonic signals generated from the ultrasonic signal generating unit.

3. The mobile communication terminal case of claim 2, wherein the plurality of ultrasonic signal receiving portions are composed of a first ultrasonic signal receiving portion and a second ultrasonic signal receiving portion disposed at two sides of the reference signal receiving unit.

4. The mobile communication terminal case of claim 3, wherein the first ultrasonic signal receiving portion, the reference signal receiving unit and the second ultrasonic signal receiving portion are arranged on a circumferential surface of the main body unit.

5. The mobile communication terminal case of claim 1, wherein the communication unit performs communication with the mobile communication terminal, by a wireless method or a wired method.

6. The mobile communication terminal case of one of claims 1 to 5, wherein a bent surface is formed at an upper part of the main body unit, so as to enclose an upper end of the mobile communication terminal,
wherein an insertion unit having an insertion groove is formed at a lower part of the main body unit, the insertion groove for inserting a lower end of the mobile communication terminal.

7. The mobile communication terminal case of claim 6, wherein a battery is provided in the main body unit, and
wherein the battery is configured to charge the mobile communication terminal by supplying a charging current to the mobile communication terminal.

8. The mobile communication terminal case of claim 6, wherein a battery is provided in the main body unit, and
wherein a power button, configured to selectively supply power from the battery to the mobile communication terminal, is provided at one side of the main body unit.

9. The mobile communication terminal case of claim 8, wherein a charging terminal, which contacts an external terminal of the mobile communication terminal, is provided on an inner side of the insertion groove, such that the battery and a battery inside the mobile communication terminal are charged reciprocally.

10. The mobile communication terminal case of claim 6, wherein an earphone hole, through which an earphone insertion opening of the mobile communication terminal is exposed to outside, is penetratingly-formed at the bent surface, and
wherein an antenna hole, through which an antenna of the mobile communication terminal is exposed to outside, is penetratingly-formed at the bent surface.

11. The mobile communication terminal case of claim 6, wherein a microphone hole, through which a microphone of the mobile communication terminal is exposed to outside, is penetratingly-formed on a front surface of the insertion unit.

12. A tablet PC case, comprising:
a main body unit arranged at an outer surface of the tablet PC such that a touch screen of an electronic device may be exposed outwardly;
a position measuring unit including an electronic pen for inputting a content to be displayed on the touch screen, and including position measuring means for measuring the position of the electronic pen tip; and
a communication unit which transmits information on the position of the electronic pen tip measured by the position measuring unit to the tablet PC,
wherein the electronic pen includes a reference signal generating unit for generating a reference signal, and an ultrasonic signal generating unit for generating ultrasonic signals, and
wherein the position measuring means include a reference signal receiving unit for receiving an infrared signal generated from the reference signal generating unit, and a plurality of ultrasonic signal receiving portions for receiving ultrasonic signals generated from the ultrasonic signal generating unit, the reference signal receiving unit and the ultrasonic signal receiving portions protruding from one side of the main body unit toward a front surface of the touch screen.

13. The tablet PC case of claim 12, wherein the ultrasonic signal receiving portions are composed of a first ultrasonic signal receiving portion and a second ultrasonic signal receiving portion disposed at two sides of the reference signal receiving unit respectively.

14. The tablet PC case of claim 13, wherein the reference signal receiving unit, the first ultrasonic signal receiving portion and the second ultrasonic signal receiving portion are disposed on an outer surface of the main body unit.

15. The tablet PC case of claim 12, wherein the communication unit performs communication with the tablet PC, by a wireless method or a wired method.

16. The tablet PC case of one of claims 12 to 15, wherein a keypad unit is further provided at one side of the main body unit so as to be overlapped with or unfolded from the main body unit.

17. The tablet PC case of claim 16, wherein the keypad unit is provided at one side of the main body unit in a detachable manner.

18. The tablet PC case of claim 17, wherein a holder, configured to support the tablet PC with a predetermined inclination angle from a ground surface, is provided on a rear surface of the main body unit.
